(19) Europäisches Patentamt
European Patent Office
Office européen des brevets

(11) **EP 2 172 510 A1**

(12) **EUROPEAN PATENT APPLICATION**

(43) Date of publication:
**07.04.2010 Bulletin 2010/14**

(51) Int Cl.:
***C08J 5/18*** *(2006.01)*

(21) Application number: **08382039.9**

(22) Date of filing: **01.10.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **DOW GLOBAL TECHNOLOGIES INC.**
**Midland, MI 48674 (US)**

(72) Inventors:
• **Domenech, Angels**
**08031, Barcelona (ES)**

• **Manrique, Antonio**
**43007, Tarragona (ES)**
• **Nieto, Jesús**
**43850, Cambrils (Barcelona) (ES)**

(74) Representative: **Elzaburu Marquez, Alberto et al**
**Elzaburu, S.L.P.**
**C/ Miguel Ángel, 21**
**E-28010 Madrid (ES)**

(54) **Barrier films and method for making and using the same**

(57)    Provided are monolayer and multilayer films having improved barrier properties. The monolayer film is a blend of two components: (1) a linear low density polyethylene and (2) a propylene-based polymer, a high density polyethylene, and combinations thereof. The propylene-based polymer can be a propylene homopolymer, a propylene/a-olefin interpolymer, a propylene/ethylene interpolymer, or a propylene/ethylene copolymer. The multilayer film has an inner layer located between two outer layers. The inner layer is composed of one or more of the following: high density polyethylene, and/or any of the foregoing propylene-based polymers. The outer layers may be the same or different and are composed of one or more of the following: linear low density polyethylene, high density polyethylene, and any of the foregoing propylene-based polymers. The present films exhibit improved oxygen barrier properties particularly for balage applications.

EP 2 172 510 A1

**Description**

BACKGROUND

Polymeric films have wide application in packaging because the properties of polymeric films can be tailored for a desired end use. Overwrap films, for example, are used for packaging goods, foodstuffs, forage crops and balage. In such applications, it is important for the overwrap film to have good barrier properties, good mechanical, cling, and stretch properties, good toughness, and strong resistance to puncture, impact, and tear.

The art maintains a continuous interest and need for packaging films with improved barrier properties, toughness, tear, puncture, and impact resistance while simultaneously providing flexibility and resilience for use with packaging and wrapping machines.

SUMMARY

The present disclosure is directed to monolayer and multilayer films with improved barrier properties. The present films also have mechanical tear, impact, puncture, and processability properties suitable for packaging applications and stretch packaging in particular. In an embodiment, a film is provided. The film includes a blend of a first component and a second component. The first component is a linear low density polyethylene. The second component is a propylene-based polymer, a high density polyethylene, and combinations thereof. The propylene-based polymer can be a propylene homopolymer, a propylene/$\alpha$-olefin interpolymer, a propylene/ethylene interpolymer, a propylene/ ethylene copolymer, and combinations thereof. The film has a thickness from about 1 micron to about 100 microns. In another embodiment, the film has an oxygen transmission rate less than 10,800 cc/m$^2$/24hr as measured in accordance with ASTM D 3985-05.

The present disclosure provides another film. In an embodiment, a multilayer film is provided. The multilayer film has an inner layer located between a first outer layer and a second outer layer. The inner layer is composed of a high density polyethylene, a propylene homopolymer, a propylene/$\alpha$-olefin interpolymer, a propylene/ethylene interpolymer, a propylene/ethylene copolymer, and combinations thereof. The first outer layer and the second outer layer can be the same or different. Each outer layer is composed of a linear low density polyethylene, a high density polyethylene, a propylene homopolymer, a propylene/$\alpha$-olefin interpolymer, a propylene/ethylene copolymer and combinations thereof. The thickness of at least one outer layer is greater than the thickness of the inner layer. In another embodiment, the multilayer film has an oxygen transmission rate less than about 10,800 cc/m$^2$/24hr.

In an embodiment, a method for producing bale silage is provided. The method includes wrapping a wrapping film around a bale of a forage crop and forming an airtight barrier around the bale with the wrapping film. The method includes preventing less than 10,800 cc/m$^2$/24hr of oxygen through the barrier.

The wrapping film can be any embodiment of the monolayer film or any embodiment of the multilayer film, stretch or un-stretched. In an embodiment, the method includes stretching the film during the wrapping.

In an embodiment, the method includes forming the airtight barrier with from about 1 wt % to about 40 wt % less film based on the weight of an airtight barrier formed by way of a conventional bale silage wrapping procedure using a film composed of LLDPE.

An advantage of the present disclosure is the provision of a monolayer film and/or a multilayer film with improved gas barrier and/or water barrier properties.

An advantage of the present disclosure is the provision of a monolayer film and/or a multilayer film with improved oxygen barrier properties.

An advantage of the present disclosure is the provision of a monolayer film and/or a multilayer film with improved barrier properties and impact, tear, and puncture resistance suitable for balage applications.

An advantage of the present disclosure is the provision of a monolayer balage wrapping film and/or a multilayer balage wrapping film with improved barrier properties that can be used with conventional balage wrapping equipment.

DETAILED DESCRIPTION

The present disclosure is directed to monolayer and multilayer films with improved gas barrier properties. The present films provide desirable stretch and cling properties for packaging applications and further provide a low oxygen transmission rate.

In an embodiment, a film is provided. The film includes a blend of a first component and a second component. The first component is a linear low density polyethylene. The second component is a propylene-based polymer, a high density polyethylene (HDPE), and combinations thereof. The propylene-based polymer can be a propylene homopolymer, a propylene/$\alpha$-olefin interpolymer, a propylene/ethylene interpolymer, and combinations thereof. The film has a thickness from about 1 micron to about 100 microns. The film has an oxygen transmission rate ("OTR") less than about 10,800

cc/m$^2$/24hr as measured in accordance with ASTM D 3985-05. The OTR can be from about 4000 cc/m$^2$/24hr to about 10,000 cc/m$^2$/24hr, of from about 5,000 cc/m$^2$/24hr to about 9,000 cc/m$^2$/24hr.

The film can be a monolayer film or a layer of a multilayer layer film. The film can be stretched or un-stretched. The film has a thickness from about 1 μm to about 100 μm or from about 20 μm to about 90 μm, or from about 30 μm to about 80 μm.

In an embodiment, the film is a monolayer un-stretched film having a thickness from about 1 micron to about 100 microns, or from about 10 microns to about 50 microns, or from about 20 to about 40 microns, or about 25 microns.

In an embodiment, the film is a monolayer stretched film having a thickness from about 1 micron to about 100 microns, or from about 5 microns to about 50 microns, or from about 10 microns to about 30 microns. The film is stretched from about 1% to about 200%, or from about 10% to about 100% (based on the length of the pre-stretched film).

The blend can be a two polymer blend including the first component (*i.e.*, the linear low density polyethylene) and only one member of the second component (*i.e.*, one of HDPE, propylene homopolymer, propylene/α-olefin interpolymer, or propylene/ethylene interpolymer). The blend can also be a three-, or four-polymer blend including the first component and two or three members of the second component. In an embodiment, the blend is a two component blend (*i.e.,* first component + a single polymer from the second component).

The first component is a linear low density polyethylene. Linear low density polyethylene ("LLDPE") comprises, in polymerized form, a majority weight percent of ethylene based on the total weight of the LLDPE. In an embodiment, the LLDPE is an interpolymer of ethylene and at least one ethylenically unsaturated comonomer. In one embodiment, the comonomer is a $C_3$-$C_{20}$ α-olefin. In another embodiment, the comonomer is a $C_3$-$C_8$ α-olefin. In another embodiment, the $C_3$-$C_8$ α-olefin is selected from propylene, 1-butene, 1-hexene, or 1-octene. In an embodiment, the LLDPE is selected from the following copolymers: ethylene/propylene copolymer, ethylene/butene copolymer, ethylene/hexene copolymer, and ethylene/octene copolymer. In a further embodiment, the LLDPE is an ethylene/octene copolymer.

The LLDPE has a density in the range from about 0.890 g/cc to about 0.940 g/cc, or from about 0.91 g/cc to about 0.94 g/cc. The LLDPE has a melt index (MI) from about 0.1 g/10 min to about 10 g/10 min, or about 0.5g/10 min to about 5g/10 min.

LLDPE can be produced with Ziegler-Natta catalysts, or single-site catalysts, such as vanadium catalysts and metallocene catalysts. In an embodiment, the LLDPE is produced with a Ziegler-Natta type catalyst. LLDPE is linear and does not contain long chain branching and is different than low density polyethylene ("LDPE") which is branched or heterogeneously branched polyethylene. LDPE has a relatively large number of long chain branches extending from the main polymer backbone. LDPE can be prepared at high pressure using free radical initiators, and typically has a density from 0.915 g/cc to 0.940 g/cc.

In an embodiment, the LLDPE is a Ziegler-Natta catalyzed ethylene and octene copolymer and has a density from about 0.91 g/cc to about 0.93 g/cc, or about 0.92 g/cc. The LLDPE has a crystallinity from about 40% to about 50%, or about 47%. Nonlimiting examples of suitable Ziegler-Natta catalyzed LLDPE are polymers sold under the tradename DOWLEX, available from The Dow Chemical Company, Midland, Michigan. In a further embodiment, the LLDPE is DOWLEX 2045 S.

In an embodiment, the LLDPE is a single-site catalyzed LLDPE ("sLLDPE"). As used herein, "sLLDPE" is a LLDPE polymerized using a single site catalyst such as a metallocene catalyst or a constrained geometry catalyst. A "metallocene catalyst" is a catalyst composition containing one or more substituted or unsubstituted cyclopentadienyl moiety in combination with a Group 4, 5, or 6 transition metal. Nonlimiting examples of suitable metallocene catalysts are disclosed in U.S. Patent No. 5,324,800, the entire content of which is incorporated herein by reference. A "constrained geometry catalyst" comprises a metal coordination complex comprising a metal of groups 3-10 or the Lanthanide series of the Periodic Table and a delocalized pi-bonded moiety substituted with a constrain-inducing moiety, said complex having a constrained geometry about the metal atom such that the angle at the metal between the centroid of the delocalized, substituted pi-bonded moiety and the center of at least one remaining substituent is less than such angle in a similar complex containing a similar pi-bonded moiety lacking in such constrain-inducing substituent, and provided further that for such complexes comprising more than one delocalized, substituted pi-bonded moiety, only one thereof for each metal atom of the complex is a cyclic, delocalized, substituted pi-bonded moiety. The constrained geometry catalyst further comprises an activating cocatalyst. Nonlimiting examples of suitable constrained geometry catalysts are disclosed U.S. Pat. No. 5,132,380, the entire content of which is incorporated by reference herein.

In one embodiment, the sLLDPE has a density of less than 0.940 g/cc or from about 0.90 g/cc to about 0.94 g/cc. In one embodiment, the sLLDPE has a melt index from about 0.5 g/10 min to about 3 g/10 min, or from about 0.5 g/10 min to about 2 g/10 min. The sLLDPE, may be unimodal or multimodal (*i.e.*, bimodal). A "unimodal sLLDPE" is a LLDPE polymer prepared from one single-site catalyst under one set of polymerization conditions. Nonlimiting examples of suitable unimodal sLLDPE include those sold under the trade names EXXACT and EXCEED, available from the ExxonMobil Chemical Company, Houston, Texas; and AFFINITY available from The Dow Chemical Company, Midland, Michigan.

In an embodiment, the sLLDPE is multimodal. A "multimodal sLLDPE is a LLDPE polymer prepared from two or more different catalysts and/or under two or more different polymerization conditions. A "multimodal sLLDPE" comprises at least a lower molecular weight component (LMW) and a higher molecular weight (HMW) component. Each component is prepared with a different catalyst and/or under different polymerization conditions. The prefix "multi" relates to the number of different polymer components present in the polymer. A nonlimiting example of multimodal sLLDPE is set forth in U.S. Patent No. 5,047,468, the entire content of which is incorporated by reference herein. Further nonlimiting examples of suitable multimodal sLLDPE include those sold under the tradenames ENHANCED POLYETHYLENE and ELITE available from The Dow Chemical Company, Midland, Michigan.

Not wishing to be bound by any particular theory, it is believed that single-site catalyzed LLDPE is homogeneously branched whereas Ziegler-Natta catalyszed LLDPE is heterogeneously branched. With homogeneously branched LLDPE, the comonomer is randomly distributed within a given interpolymer molecule and substantially all of the interpolymer molecules have the same ethylene/comonomer ratio within that interpolymer. On the other hand, heterogeneously branched LLDPE has a distribution of branching, including a branched portion (similar to a very low density polyethylene), and a substantially linear portion (similar to linear homopolymer polyethylene).

For example, a Ziegler-Natta catalyzed LLDPE, such as DOWLEX 2045 (an ethylene/octene copolymer having a melt index ($I_2$) of about 1 g/10 min, a density of about 0.92 g/cm$^3$, a melt flow ratio ($I_{10}/I_2$) of about 7.93 and a molecular weight distribution ($M_w/M_n$) of about 3.34), contains heterogeneous short chain branching equal to the number of carbons of the ethylenically unsaturated comonomer minus two. The comonomer is intermolecularly distributed in a characteristic way, whereby a fraction of the molecules are free of, or otherwise devoid of, comonomer. The comonomer-free fraction is further characterized by having a high molecular weight compared to the branched fraction of the sample. Upon crystallization, the comonomer-free fraction forms large crystals due to the absence of chain defects that interfere with the chain folding process. Large crystals are desirable for barrier properties, as gas molecules (such as oxygen for example) cannot penetrate the large crystals. Thus, at a given crystallinity, a heterogeneous crystal size distribution provides greater gas barrier capability compared to homogeneously branched polyethylene.

Homogeneously branched LLDPE, on the other hand, may or may not have a comonomer-free fraction. Absent a comonomer-free fraction, homogeneously-branched LLDPE exhibits a homogeneous crystal size distribution. When the comonomer-free fraction is present, the molecular weight of the comonomer-free fraction is low compared to the branched fraction, resulting in a small crystal size. Accordingly, crystals in a homogeneously-branched LLDPE are substantially the same size, the crystals being smaller than the crystals found in a heterogeneously branched LLDPE with the same copolymer and copolymer content. The smaller, homogeneously distributed crystals provide less gas barrier capability when compared to the larger crystals of the heterogeneously-branched LLDPE. Consequently, heterogeneously-branched LLDPE (*i.e.*, Ziegler-Natta catalyzed LLDPE) has greater gas barrier capability when compared to homogeneously-branched LLDPE (*i.e.,* single-site catalyzed LLDPE).

The blend of the film includes a second component. The second component is a propylene-based polymer, a high density polyethylene, and combinations thereof. The propylene-based polymer can be a propylene homopolymer, a propylene/α-olefin interpolymer, a propylene/ethylene interpolymer, and any combination of the foregoing. The propylene homopolymer (also referred to as polypropylene) can be isotactic, atactic, or syndiotactic. In one embodiment, the propylene homopolymer is isotactic. The propylene homopolymer has a density from about 0.88 g/cc to about 0.92 g/cc, or about 0.90 g/cc. In one embodiment, the propylene homopolymer has a melt flow rate (MFR) from about 1.0 g/ 10 min to about 10 g/10 min, or from about 2.0 g/ 10 min to about 8 g/10 min. In one embodiment the propylene homopolymer has a crystallinity from about 40% to about 60%, or about 50%.

In an embodiment, the propylene homopolymer is isotactic and has a density from about 0.88 g/cc to about 0.92 g/cc, or about 0.90 g/cc, a melt flow rate from about 1.0 g/10 min to about 10 g/10 min, or about 2.1 g/10 min, and a crystallinity from about 40% to about 60%, or about 49%.

In an embodiment, the propylene-based polymer of the second component is a propylene/α-olefin interpolymer alone or in combination with the propylene homopolymer, the propylene/ethylene interpolymer, and/or the HDPE. The propylene/α-olefin interpolymer comprises, in polymerized form, a majority weight percent propylene based on the weight of the interpolymer, and at least one α-olefin, or at least one $C_4$-$C_{20}$ α-olefin, or at least one $C_4$-$C_8$ α-olefin. In one embodiment, the propylene/α-olefin interpolymer is a random interpolymer. In another embodiment, the propylene/α-olefin interpolymer is a block interpolymer. In one embodiment, the propylene/α-olefin interpolymer has a density from about 0.85 g/cc to about 0.95 g/cc, or about 0.90 g/cc. In one embodiment, the propylene/α-olefin interpolymer has a MFR from about 0.1g/10 min to about 10g/10 min, or from about 0.5g/10 min to about 5.0g/10 min. In one embodiment, the propylene/α-olefin interpolymer has a crystallinity from about 20% to about 40%, or about 30%. The propylene/α-olefin interpolymer can be formed using single site catalysts (metallocene or constrained geometry), Ziegler-Natta catalysts, or non-metallocene, metal-centered, heterodryl ligand catalysts. Suitable comonomers for polymerizing with propylene include, but are not limited to, 1-butene, 1-pentene, 1-hexene, 1-heptene, 1-octene, 1-nonene, 1-decene, 1-undecene, 1-dodecene, as well as 4-methyl-1-pentene, 4-methyl-1-hexene, 5-methyl-1-hexene, and vinylcyclohexane.

In one embodiment, the α-olefin of the propylene/α-olefin interpolymer is selected from 1-butene, 1-hexene, or 1-octene. In an embodiment, the propylene/α-olefin interpolymer has a density from about 0.85 g/cc to about 0.95 g/cc, or about 0.90 g/cc, a melt flow rate from about 0.1 g/10 min to about 10 g/10 min, and a crystallinity from about 20% to about 40%, or about 30%.

Other nonlimiting examples of suitable propylene/α-olefin interpolymers include propylene/1-butene, propylene/1-hexene, propylene/4-methyl-1-pentene, propylene/1-octene, propylene/ethylene/1-butene, propylene/ethylene/ENB, propylene/ethylene/1-hexene, propylene/ethylene/1-octene, propylene/styrene, and propylene/ethylene/styrene.

In an embodiment, the propylene/α-olefin interpolymer contains greater than 50 mole percent (based on total moles of polymerizable monomers) polymerized propylene. Such propylene-based polymers include VERSIFY polymers (The Dow Chemical Company) and VISTAMAXX polymers (ExxonMobil Chemical Co.), LICOCENE polymers (Clariant), EASTOFLEX polymers (Eastman Chemical Co.), REXTAC polymers (Hunstman), VESTOPLAST polymers (Degussa), PROFAX PF-611 AND PROFAX PF-814 (Montell).

In an embodiment, the propylene-based polymer of the second component is a propylene/ethylene interpolymer alone or in combination with the propylene homopolymer, the propylene/α-olefi interpolymer, and/or the HDPE. The propylene/ethylene interpolymer comprises, in polymerized form, a majority weight percent propylene based on the weight of the interpolymer, ethylene, and optionally and at least one α-olefin, or at least one $C_4$-$C_{20}$ α-olefin, or at least one $C_4$-$C_8$ α-olefin. In one embodiment, the propylene/ethylene interpolymer is a random interpolymer. In another embodiment, the propylene/ethylene interpolymer is a block interpolymer. In one embodiment, the propylene/ethylene interpolymer has a density from about 0.85 g/cc to about 0.95 g/cc, or about 0.90 g/cc. In one embodiment, the propylene/ethylene interpolymer has a MFR from about 0.1g/10 min to about 10g/10 min, or from about 0.5g/10 min to about 5.0g/10 min. In one embodiment, the propylene/ethylene interpolymer has a crystallinity from about 20% to about 40%, or about 30%. The propylene/ethylene interpolymer can be formed using single site catalysts (metallocene or constrained geometry), Ziegler-Natta catalysts, or non-metallocene, metal-centered, heteroaryl ligand catalysts. Suitable comonomers for polymerizing with propylene and ethylene include, but are not limited to, 1-butene, 1-pentene, 1-hexene, 1-heptene, 1-octene, 1-nonene, 1-decene, 1-undecene, 1-dodecene, as well as 4-methyl-1-pentene, 4-methyl-1-hexene, 5-methyl-1-hexene, and vinylcyclohexane.

In one embodiment, the α-olefin of the propylene/ethylene interpolymer is selected from 1-butene, 1-hexene, or 1-octene.

In an embodiment, the propylene/ethylene interpolymer has a density from about 0.85 g/cc to about 0.95 g/cc, or about 0.90 g/cc, a melt flow rate from about 0.1 g/10 min to about 10 g/10 min, and a crystallinity from about 20% to about 40%, or about 30%.

In an embodiment, the propylene-based polymer is a propylene/ethylene copolymer. The propylene/ethylene copolymer comprises, in polymerized form, a majority weight percent propylene based on the weight of the copolymer and ethylene. In one embodiment, the propylene/ethylene copolymer is a random copolymer. In another embodiment, the propylene/ethylene copolymer is a block copolymer. In one embodiment, the propylene/ethylene copolymer has a density from about 0.85 g/cc to about 0.95 g/cc, or about 0.90 g/cc. In one embodiment, the propylene/ethylene copolymer has a MFR from about 0.1 g/10 min to about 10 g/10 min, or from about 0.5 g/10 min to about 5.0 g/10 min. In one embodiment, the propylene/ethylene copolymer has a crystallinity from about 20% to about 40%, or about 30%. The propylene/ethylene copolymer can be formed using single site catalysts (metallocene or constrained geometry), Ziegler-Natta catalysts, or non-metallocene, metal-centered, heteroaryl ligand catalysts. In an embodiment, the propylene/ethylene copolymer is a Ziegler-Natta catalyzed copolymer. In one embodiment, the propylene/ethylene copolymer contains less than 20 wt % ethylene comonomer, or from about 0.1 wt % to about 20 wt %, or about 1 wt % to about 10 wt %, or from about 2 wt % to about 5 wt % ethylene comonomer, based on the total weight of the copolymer.

In an embodiment, the propylene/ethylene copolymer has a density from about 0.85 g/cc to about 0.95 g/cc, or of about 0.90 g/cc, a melt flow rate from about 0.1 g/10 min to about 10 g/10 min, or about 2.0 g/10 min, and a crystallinity from about 20% to about 40%, or about 30 %.

In one embodiment, the propylene/α-olefin interpolymer comprises, in polymerized form, propylene, an α-olefin or ethylene, and optionally one or more saturated comonomers and the propylene/α-olefin interpolymer is characterized as having at least one, or more than one, of the following properties: (i) $^{13}$C NMR peaks corresponding to a regio-error at about 14.6 ppm and about 15.7 ppm, the peaks of about equal intensity, (ii) a skewness index, $S_{ix}$, greater than about -1.20, (iii) a DSC curve with a $T_{me}$ that remains essentially the same, and a $T_{Max}$ that decreases as the amount of comonomer (*i.e.*, units derived from the α-olefin or ethylene and optionally the unsaturated comonomer(s)) in the interpolymer is increased, and (iv) an X-ray diffraction pattern that reports more gamma-form crystals than a comparable interpolymer prepared with a Ziegler-Natta catalyst. It is noted that in property (i), the distance between the two $^{13}$C NMR peaks is about 1.1 ppm. In an embodiment, the propylene/α-olefin interpolymer is a VERSIFY polymer available from The Dow Chemical Company. This propylene/α-olefin interpolymer is made using a nonmetallocene, metal-centered, heteroaryl ligand catalyst. Typically propylene/α-olefin interpolymers of this embodiment are characterized by at least one, or at least two, or at least three, or all four properties described in this previous paragraph.

The second component can be HDPE alone or in combination with any of the foregoing propylene-based polymers. The HDPE is an ethylene homopolymer or an ethylene-based interpolymer. The ethylene-based interpolymer comprises, in polymerizied form, a majority weight percent ethylene based on the weight of the interpolymer, and one or more comonomers. The HDPE has a density greater than 0.940 g/cc. In an embodiment, the HDPE has a density from about 0.940 g/cc to about 0.970 g/cc, or from about 0.950 g/cc to about 0.960 g/cc, or about 0.956 g/cc. In one embodiment, the HDPE has a melt index from about 0.1 g/10 min to about 10 g/ 10 min or from about 0.5 g/10 min to about 5 g/10 min. The HDPE can include ethylene and one or more $C_3$-$C_{20}$ $\alpha$-olefin comonomers. The comonomer(s) can be linear or branched. Nonlimiting examples of suitable comonomers include propylene, 1-butene, 1-pentene, 4-methyl-1-pentene, 1-hexene, and 1-octene. The HDPE can be prepared with either Ziegler-Natta, chromium-based, constrained geometry or metallocene catalysts in slurry reactors, gas phase reactors or solution reactors. In an embodiment, the HDPE has a crystallinity from about 40% to about 60%, or about 50%.

In an embodiment, the HDPE is an ethylene/butene copolymer with a density from about 0.95 g/cc to about 0.96 g/cc, a melt index from about 1.5 g/10 min to about 2.5 g/10 min, and a crystallinity from 48% to about 54% or about 52%.

The HDPE may comprise two or more of the foregoing embodiments.

In an embodiment, the HDPE is an ethylene/octene copolymer and has a density from about 0.940 g/cc to about 0.970 g/cc, or about 0.956 g/cc, a melt index from about 0.1 g/10 min to about 10 g/10 min, or about 2.0 g/ 10 min, and a crystallinity from about 40% to about 60%, or about 52 %.

In an embodiment, the film contains from about 60 wt % to about 99 wt % of the first component and from about 40 wt % to about 1 wt % of the second component based on the sum weight of the first and second components. In another embodiment, the first component is present in an amount from about 80 wt % to about 95 wt %, or about 90 wt % of the film, and the second component is present in an amount from about 20 wt % to about 5 wt %, or about 10 wt % of the film.

In an embodiment, the film contains from about 60 wt % to about 99 wt %, or from about 80 wt% to about 95 wt % of the first component and from about 40 wt % to about 1 wt %, or from about 20 wt % to about 5 wt % of the second component, based on the sum weight of the first and second components. In another embodiment, the film contains about 90 wt % linear low density polyethylene and about 10 wt % propylene homopolymer.

In an embodiment, the film contains about 90 wt % linear low density polyethylene and about 10 wt % high density polyethylene. The weight percent is based on the sum weight of the first and second components.

In an embodiment, the film is a monolayer film and has an Elmendorf tear value in the cross direction (CD) from about 400g to about 900g, or from about 500 g to about 800 g. In a further embodiment, the film has an Elmendorf tear value in the machine direction (MD) from about 100 g to about 500 g, or from about 200 g to about 400g. The Elmendorf tear value is measured in accordance with ASTM D-1922-06 (type-A).

In an embodiment, the film is a monolayer film and has a dart impact strength from about 50 g to about 400 g, or from about 100 g to about 300g. The dart impact strength is measured in with ISO 7765-1-88 method A.

In an embodiment, the film is a monolayer film and has a puncture force from about 5 g to about 25 g, or from about 10 g to about 20 g. The puncture force is measured in accordance with ASTM D-5748-95.

The present monolayer film can be made by two or more embodiments as disclosed herein. The blend of the monolayer film may be comprised of two or more components disclosed herein. The first component may comprise two or more embodiments as disclosed herein. The second component may comprise two or more embodiments as disclosed herein.

In an embodiment, a multilayer film is provided. The multilayer film includes an inner layer, a first outer layer and a second outer layer. The inner layer is located between the first outer layer and the second outer layer. In another embodiment, the inner layer is adjacent to the first outer layer on one surface, and the second outer layer on the opposite surface, in an "outer/inner/outer" layer configuration. The thickness of one (or each) of the outer layer(s) is greater than the thickness of the inner layer.

In one embodiment, the thickness of the inner layer, the first outer layer and the second outer layer may be the same or different. In one embodiment, the thickness of the first outer layer and the second outer layer can be the same or different.

In an embodiment, the thickness of one (or both) of the outer layer(s) can be at least two times, or four times greater than the thickness of the inner layer. In a further embodiment, the thickness of the first outer layer and the second outer layer may be the same or different.

In an embodiment, the combined thickness of the first outer layer and the second outer layer is from about 70% to about 99.5% the total thickness of the multilayer film. In one embodiment, the thickness of the inner layer is less than or equal to about 30%, or from about 0.5% to less than, or equal to 20%, the total thickness of the multilayer film.

In an embodiment, the first outer layer has the same thickness as the second outer layer.

In one embodiment, one (or both) outer layer(s) has a thickness that is greater than the thickness of the inner layer.

In an embodiment, the thickness for each of the outer layers is from about 35% to about 49.75% the total thickness of the multilayer film, and the thickness of the inner layer is from about 30% to about 0.5% the total thickness of the multilayer film. In one embodiment, the multilayer film has a layer thickness distribution (percent) of 45/10/45 (outer/inner/outer) based on the total multilayer film thickness. In another embodiment, the multilayer film has a layer thickness distribution of 40/20/40, based on the total multilayer film thickness.

In an embodiment, the inner layer has a thickness that is less than, or equal to 20%, or from about 0.5% to 20% the total thickness of the multilayer film. In a further embodiment, the first and second outer layers have the same thickness.

The multilayer film can be stretched or un-stretched. In one embodiment, the multilayer film has a thickness from about 1 $\mu$m to about 100 $\mu$m or from about 20 $\mu$m to about 90 $\mu$m, or from about 30 $\mu$m to about 80 $\mu$m.

In an embodiment, the multilayer film is an un-stretched film and has a thickness from about 1 micron to 100 microns, or from about 10 microns to about 50 microns, or from about 20 microns to about 40 microns, or about 25 microns.

In an embodiment, the multilayer film is a stretched film and has a thickness from about 1 micron to about 100 microns, or from about 5 microns to about 50 microns, or from about 10 microns to about 30 microns, or about 25 microns. The film is stretched from about 1% to about 200%, or from about 10% to about 100% the length of the pre-stretched film.

The multilayer film has an oxygen transmission rate (OTR) less than about 10,800 cc/$\mu$m$^2$/24hr as measured in accordance with ASTM D 3985-05. In an embodiment, the OTR is from about 4000 cc/m$^2$/24hr to about 10,000 cc/m$^2$/24hr, or from about 5,000 cc/m$^2$/24hr to about 9,000 cc/m$^2$/24hr, or from about 6,000 cc/m$^2$/24hr to about 8,000 cc/m$^2$/24hr.

In an embodiment, the inner layer includes one or more of the following components: a high density polyethylene (HDPE), propylene-based polymer (*i.e.,* a propylene homopolymer, a propylene/$\alpha$-olefin interpolymer, a propylene/ethylene interpolymer, and/or a propylene/ethylene copolymer). The HDPE, the propylene homopolymer, the propylene/$\alpha$-olefin interpolymer, the propylene/ethylene interpolymer, and propylene/ethylene copolymer may include any respective HDPE, propylene homopolymer, propylene/$\alpha$-olefin interpolymer, propylene/ethylene interpolymer, or propylene/ethylene copolymer as previously disclosed above for each component. In an embodiment, the inner layer is a single component. For example, the inner layer is composed of only one of HDPE, propylene homopolymer, propylene/$\alpha$-olefin interpolymer, propylene/ethylene interpolymer, or propylene/ethylene copolymer.

The multilayer film also includes the first outer layer and the second outer layer. The composition and/or the thickness of the first outer layer and the second outer layer may be the same or different. In one embodiment, the first outer layer and the second outer layer are each composed of one or more of the following components: LLDPE, HDPE, propylene homopolymer, propylene/$\alpha$-olefin interpolymer, propylene/ethylene interpolymer, and/or propylene/ethylene copolymer. The LLDPE, the HDPE, the propylene homopolymer, the propylene/$\alpha$-olefin interpolymer, the propylene/ethylene interpolymer and the propylene/ethylene copolymer may be any respective polymer as previously disclosed above. The LLDPE can be a sLLDPE as disclosed above.

In an embodiment, the inner layer, and/or one (or both) outer layer(s) of the multilayer film can be any blend as disclosed herein for the monolayer film.

In an embodiment, at least one of the outer layers is a single component. Thus, at least one outer layer is composed of only one of the following: LLDPE, HDPE propylene homopolymer, propylene/$\alpha$-olefin interpolymer, propylene/ethylene interpolymer, or propylene/ethylene copolymer. In a further embodiment, the first outer layer is composed of a single component and the second outer layer is composed of a single component. The single component in each outer layer may be the same or different.

In an embodiment, each layer is a single component. Thus, each outer layer is composed of only one of the following: LLDPE, HDPE propylene homopolymer, propylene/$\alpha$-olefin interpolymer, propylene/ethylene interpolymer, or propylene/ethylene copolymer. The inner layer is composed of only one of the following: the high density polyethylene (HDPE), the propylene homopolymer, or the propylene/$\alpha$-olefin interpolymer.

In an embodiment, the inner layer directly contacts at least one of the outer layers. As used herein, "contact" is the act or the condition of touching, interfacing, and/or meeting. Thus, when one layer is in "direct contact with" or "directly contacts" another (or other) layer, the one layer is immediately adjacent to, and touches, interfaces, and/or meets the other layer such that no intervening layer(s) and/or no intervening structure(s) is present between the one layer and the other layer.

In a further embodiment, the inner layer is coextensive, or substantially coextensive, with the first outer layer and the second outer layer and the inner layer directly contacts the first outer layer and the inner layer directly contacts the second outer layer. Thus, the multilayer film includes no tie layer (or intervening layer) between the first outer layer and the inner layer and/or no tie layer (or intervening layer) between the second outer layer and the inner layer.

In an embodiment, at least one outer layer is an outermost layer. As used herein, "an outermost layer" is a layer most distant from the inner layer. An outermost layer is often referred to as a skin layer or a surface layer. In another embodiment, the at least one outermost layer is in direct contact with the inner layer.

In an embodiment, both the first outer layer and the second outer layer are outermost layers. In another embodiment, the first outermost layer and the second outermost layer are in direct contact with the inner layer.

The multilayer film may be a laminated film or a coextruded film. In an embodiment, the multilayer film is a coextruded film whereby at least one of the outer layers is coextruded to the inner layer. In a further embodiment, the first outer layer is coextruded to the inner layer and the second outer layer is coextruded to the inner layer. In yet a further embodiment, the first and second outer layers are outermost layers coextruded to the inner layer.

In an embodiment, the inner layer is an HDPE and at least one, or both, outer layer(s) is an LLDPE. The HDPE/LLDPE can be any HDPE/LLDPE as disclosed herein. The LLDPE can be any LLDPE or a sLLDPE as disclosed herein. In a further embodiment, the HDPE has a density of about 0.956 g/cc, a melt index of about 2.0 g/ 10 min, and a crystallinity of about 52 %. The LLDPE has a density of about 0.92 g/cc, a melt index of about 1.0 g/10 min, and a crystallinity of about 47%. In a further embodiment, The LLDPE/HDPE/LLDPE layer structure provides the multilayer film with an OTR from about 5,000 cc/$\mu$m$^2$/24hr to about 7,000 cc/gm$^2$/24hr.

In an embodiment, the inner layer is a propylene homopolymer and at least one, or both, outer layer(s) is an LLDPE or a sLLDPE. The propylene homopolymer can be any propylene homopolymer as disclosed herein. The LLDPE can be any LLDPE as disclosed herein. In an embodiment, the propylene homopolymer has a density of about 0.90 g/cc and a melt flow rate of about 2.1 g/10 min, and a crystallinity of about 49%. The LLDPE/PP/LLDPE layer structure provides the multilayer film with an OTR from about 6,000 cc/gm$^2$/24hr to about 8,000 cc/gm$^2$/24hr.

In an embodiment, the inner layer is a high density polyethylene that is an ethylene/butene copolymer having a density from about 0.940 g/cc to about 0.970 g/cc, or about 0.956 g/cc, a melt index from about 0.1 g/10 min to about 10 g/10 min, or about 2.0 g/10 min, and a crystallinity from about 40% to about 60%, or about 52 %. Each outer layer is a linear low density polyethylene that is an ethylene/octene copolymer having a density from about 0.91 g/cc to about 0.93 g/cc, or about 0.92 g/cc, a melt index from about 0.1 g/10 min to about 10 g/10min, or about 1.0 g/10 min, and a crystallinity from about 40% to about 50% or about 47%.

In an embodiment, the inner layer is a propylene homopolymer having a density from about 0.88 g/cc to about 0.92 g/cc, or about 0.90 g/cc, a melt flow rate from about 1.0 g/10 min to about 10 g/10 min, or about 2.1 g/10 min, and a crystallinity from about 40% to about 60%, or about 49%. Each outer layer is a linear low density polyethylene that is an ethylene/octene copolymer having a density from about 0.91 g/cc to about 0.93 g/cc, or about 0.92 g/cc, a melt index from about 0.1 g/10 min to about 10 g/10min, or about 1.0 g/10 min, and a crystallinity from about 40% to about 50% or about 47%.

In an embodiment, the inner layer is a propylene/ethylene copolymer having a density from about 0.85 g/cc to about 0.95 g/cc, or of about 0.90 g/cc, a melt flow rate from about 0.1 g/10 min to about 10 g/10 min, or about 2.0 g/10 min, and a crystallinity from about 20% to about 40%, or about 30%. Each outer layer is a linear low density polyethylene that is an ethylene/octene copolymer having a density from about 0.91 g/cc to about 0.93 g/cc, or about 0.92 g/cc, a melt index from about 0.1 g/10 min to about 10 g/10min, or about 1.0 g/10 min, and a crystallinity from about 40% to about 50% or about 47%.

In an embodiment, the multilayer film has a dart drop impact strength from about from about 100 g to about 300 g, or from about 140 g to about 210 g.

In an embodiment, the multilayer film has puncture force from about 5 N to about 25 N, or from about 6 N to about 20 N.

In an embodiment, the multilayer film has an Elmendorf tear value (CD) from about 500 g to about 700 g, or from about 550 g to about 680 g. In another embodiment, the multilayer film has an Elmendorf tear value (MD) from about 200 g to about 400 g, or from about 250 g to about 350 g.

In an embodiment, one (or both) outer layer(s) can be a blend. For example, one (or both) outer layer(s) can be any blend disclosed herein for the monolayer film. In an embodiment, one (or both) outer layer(s) contain about 90 wt % linear low density polyethylene and about 10 wt % propylene homopolymer. In another embodiment, one (or both) outer layer(s) contain about 90 wt % linear low density polyethylene and about 10 wt % high density polyethylene.

In an embodiment, both outer layers can be a blend. For example, each outer layer can be any blend disclosed herein for the monolayer film. In an embodiment, each outer layer contains about 90 wt % linear low density polyethylene and about 10 wt % propylene homopolymer. In another embodiment, each outer layer contains about 90 wt % linear low density polyethylene and about 10 wt % high density polyethylene.

The present multilayer film can be made by two or more embodiments as disclosed herein. When the inner and/or outer layers are a blend, the blend may comprise two or more components disclosed herein. The inner layer may comprise two or more embodiments as disclosed herein. The other layer may comprise two or more embodiments as disclosed herein.

Any of the foregoing monolayer and/or multilayer films (or individual layers thereof) may comprise one or more additives. Suitable additives include, but are not limited to, adhesion promoters, antioxidants, anti-blocking agents, antistatic agents, light shielding additives (pigments), colorants, dyes, fillers (silica, talc), fire retardants, heat stabilizers, lubricants, nucleating agents, processing aids, release agents, slip agents, smoke inhibitors, thermal stabilizers, UV light-stabilizers, viscosity control agents, waxes, and any combination thereof.

In an embodiment, the monolayer film and/or the multilayer film of the present disclosure is a cling film. As used herein, a "cling film" is a film that adheres to itself, particularly when the film is overwrapped or overlapped upon itself or otherwise contacts itself. In another embodiment, any of the present films can be a stretch film.

It has been surprisingly discovered that the present monolayer and multilayer films provide improved gas barrier (oxygen, nitrogen, carbon dioxide) and/or water barrier properties in combination with desirable impact, puncture, and tear resistance properties. The present films advantageously provide improved barrier properties compared to conventional films of similar thickness. The monolayer film and/or multiple layer film can be produced by way of such nonlimiting techniques as blown film (co-)extrusion, bubble (co-)extrusion, cast (co-)extrusion or wrapping film (co-)extrusion and lamination. In the case of the multilayer film, one or both or the outer layers can be coextruded to the inner layer. Any production process can include stretching the formed film in one direction (machine or cross), or two directions (machine and cross).

In an embodiment, the monolayer film and/or the multilayer film is a blown film. As used herein, a "blown film" is a film produced by extruding (or coextruding) a polymer melt(s) from an annular die into a tube which is simultaneously pulled away from the die, and over a bubble of air trapped between the die and a collapsing device, such as one or more nip rolls, while the air is blown around the outer film tube surface to stabilize and quench the tube.

In the blown film process, contact of the outer film surface and optionally also the inner film tube surface with room temperature or cooler air cools the radially expanding tubular polymer melt as it leaves the die and travels over the trapped bubble thereby causing it to solidify. The point of transition from polymer melt to solid is commonly known as the frost line. Above the frost line, the blown or inflated tube is collapsed and fed through nip rolls which trap air within the tube to maintain an expanded bubble of fluid (typically air). Optionally, this air bubble may be used to internally cool the expanded film tube by continuously delivering cool air (*e.g.*, at about 45-55°F (7-13°C)) while simultaneously removing warm air from inside the bubble via the die. This exchange of air is usually performed at a constant rate to produce a final blown film of uniform size. The internal bubble cooling assists in quenching the film and may also produce a film having improved optical properties (*i.e.*, lower haze and higher gloss). The blow up ratio is the ratio of the film circumference after radial expansion and cooling to the die opening circumference and may be determined from the known annular die opening dimensions and by measuring the transverse width of the flattened, expanded and cooled tubular film. Typical blow up ratios range from 2:1 to 5:1. Dimensions and properties of the blown film may be adjusted by altering the blow up ratio and/or the haul off (or draw) speed of the film as it is pulled out of the die in the machine direction, for example, by driven nip rolls.

The monolayer film and/or the multilayer film can be subjected to post-processing techniques. Nonlimiting examples of post processing techniques include radiation treatment, corona treatment, silane cure, and/or polymer grafting. Sealing techniques to which the mono-/multi-layer film can be exposed include heat sealing, adhesive sealing, heat bar sealing, impulse heating, side welding, and/or ultrasonic welding.

In an embodiment, the monolayer film and/or the multilayer film can be stretched. The stretching can be in a single direction (machine or cross) or two directions (machine and cross). The mono-/multi-layer film can be stretched from 1% to about 200% the length of the pre-stretched film, or from about 10% to about 100% the length of the pre-stretched film. In another embodiment, the mono-/multi-layer film is a 100% machine-direction stretched film.

In the production of the monolayer and multilayer films of this disclosure, it has been surprisingly discovered that the gradual, incremental, and measured cooling of the extrudate advantageously increases the crystallinity of the monolayer film and/or one or more layers of the multilayer film. The barrier property of the film and/or the film layer increases as the crystallinity increases.

In an embodiment, a method for producing bale silage is provided. The method includes wrapping a wrapping film around a bale of a forage crop and forming a barrier around the bale. As used herein, a "wrapping film" is any monolayer film or any multilayer film disclosed herein. The wrapping film is wrapped around the bale to produce a barrier that is composed of one, two, three, four, or more layers of the wrapping film. As used herein, a "barrier" is an airtight covering or an airtight encasement that reduces the permeation of oxygen. Thus, the barrier can be a single layer of the wrapping film or multiple layers of the wrapping film. The method further includes preventing, with the barrier, less than 10,800 cc/m$^2$/24hr of oxygen to contact the bale.

As used herein, "bale silage" is one or more forage crops formed into a bale and covered with a wrapping (typically a polymeric film) to exclude oxygen. A "forage crop" is any plant that is grown and fed to livestock. Nonlimiting examples of forage crops suitable for bale silage include beans, clover, corns, cornstalk, grasses, grains (barley, oats, rice, wheat, rye, millet), hay, legumes (alfalfa, red clover, white clover, alsike clover, birdsfoot trefoil, vetches, sweetclover), sorghums, soybeans, vegetables, and any combination of the foregoing.

The bale can be wrapped as is known in the art. In an embodiment, a bale wrapping device wraps the wrapping film around the bale to form the barrier. A bale wrapping device typically includes a loading arm that lifts the bale and places it on a wrapping table. The wrapping table includes rollers and belts which rotate the bale while the table itself revolves. A dispensing device provides one or more rolls of the wrapping film. As the bale turns, the wrapping film is typically stretched as it is pulled through the dispensing device and wrapped tightly around the bale to remove oxygen from the bale. When the table has revolved a predetermined number of times, a lift device tilts the wrapping table to tip the wrapped bale off of the wrapping table. The dispensing device cuts the wrapping film prior to the wrapped bale falling from the wrapping table. Operation of the bale wrapping device can be controlled automatically (by way of a computer or similar logic) or manually. Conventional bale wrapping procedures typically wrap the bale with about four to about six layers of the wrapping film to produce bale silage.

Once wrapped, the forage crop undergoes an ensiling process whereby anaerobic microorganisms ferment carbohydrates present in the forage crop to lactic acid forming silage. This fermentation process inhibits the growth of other detrimental microorganisms. Bale silage typically has a moisture content from about 40 wt % to about 60 wt %.

Damage to the barrier covering, surrounding, or otherwise encasing the bale silage is disfavored. Holes or tears in the barrier, for example, allow oxygen to enter the bale silage. Oxygen in the bale silage leads to aerobic deterioration of the silage resulting in spoilage. The present monolayer and multilayer films advantageously prevent aerobic deterioration of bale silage with the provision of improved barrier properties and improved impact, tear, and puncture resistance. The present films further exhibit suitable cling properties to maintain the airtight barrier intact for extended periods - from about one day to about one year, or longer.

In an embodiment, the bale silage production method includes wrapping the wrapping film around the bale and forming an airtight barrier with from about two layers to about six layers, or two layers to about four layers of the wrapping film. In another embodiment, the bale silage production method includes forming the airtight barrier with two wrapping film layers to less than or equal to four wrapping film layers. The improved oxygen barrier capability of the present films enables the airtight barrier to be formed with fewer layers of the wrapping film while providing the same, or better, oxygen resistance to the bale when compared to conventional bale silage films. In a further embodiment, the wrapping film is stretched as it is wrapped around the bale.

The present films have improved oxygen barrier properties compared to conventional silage films. In an embodiment, the bale silage production method includes wrapping the bale with any of the present films and forming the airtight barrier (with an OTR of less than 10,800, cc/m$^2$/24hr) with from about 1 wt % to about 40 wt %, or from about 5 wt % to about 30 wt %, or from about 10 wt % to about 20 wt % less film based on the weight of an airtight barrier formed by way of a conventional bale silage wrapping procedure using a film composed of LLDPE. In another embodiment, the bale silage production method includes wrapping the bale with any of the present films and forming the airtight barrier (with an OTR of less than 10,800 cc/m$^2$/24hr) having a weight that is from about 1% to about 40%, or from about 5% to about 30%, or from about 10 wt % to about 20 wt % less than the weight of an airtight barrier composed of DOWLEX 2045 film and formed by way of a conventional bale wrapping procedure.

Another advantage of the present films is the ability to prevent aerobic deterioration of the bale silage (1) with a thinner wrapping film than conventional and/or (2) with fewer wrapping film overwraps of the bale. Thus, the present films require less wrapping film while providing the same or greater oxygen barrier protection to the bale.

In an embodiment, the bale silage production method includes stretching the film. The stretching can occur before or during the wrapping. The film can be stretched from 1% to about 200% the length of the pre-stretched film, or from about 10% to about 100% the length of the pre-stretched film.

In an embodiment, the barrier has a thickness from about 1 $\mu$m to about 100 $\mu$m, or from about 2 $\mu$m to about 50 $\mu$m, or from about 5 $\mu$m to about 30 $\mu$m.

The present films advantageously provide a barrier layer for bale silage that requires less film material to prevent aerobic deterioration of the silage compared to conventional bale silage films.

In an embodiment, a method for packaging an air sensitive item is provided. The method includes wrapping a wrapping film around the air sensitive item and forming a barrier around the air sensitive item. The wrapping film is wrapped around the air sensitive item to produce a barrier that is composed of one, two, three, four, or more layers of the wrapping film. The method further includes preventing, with the barrier, less than 10,800 cc/m$^2$/24hr of oxygen to contact the air sensitive item.

As used herein, an "air sensitive item" is an item that degrades with exposure to air. Nonlimiting examples of air sensitive items include foodstuffs, household goods, chemicals, and pharmaceuticals. The wrapping film may be wrapped onto the air sensitive item to form the barrier directly around or directly about the air sensitive item.

In an embodiment, the air sensitive item is provided in a container. Nonlimiting examples of containers include bottles, boxes, cans, cartons, crates, drums, and vials. The container is subsequently wrapped with the wrapping film. The method includes preventing, with the barrier, less than 10,800 cc/m$^2$/24hr of oxygen to contact the container.

DEFINITIONS

All references to the Periodic Table of the Elements herein shall refer to the Periodic Table of the Elements, published and copyrighted by CRC Press, Inc., 2003. Also, any references to a Group or Groups shall be to the Groups or Groups reflected in this Periodic Table of the Elements using the IUPAC system for numbering groups. Unless stated to the contrary, implicit from the context, or customary in the art, all parts and percents are based on weight. For purposes of United States patent practice, the contents of any patent, patent application, or publication referenced herein are hereby incorporated by reference in their entirety (or the equivalent US version thereof is so incorporated by reference), especially with respect to the disclosure of synthetic techniques, definitions (to the extent not inconsistent with any definitions provided herein) and general knowledge in the art.

The term "comprising," and derivatives thereof, is not intended to exclude the presence of any additional component, step or procedure, whether or not the same is disclosed herein. In order to avoid any doubt, all compositions claimed herein through use of the term "comprising" may include any additional additive, adjuvant, or compound whether polymeric or otherwise, unless stated to the contrary. In contrast, the term, "consisting essentially oF' excludes from the scope of any succeeding recitation any other component, step or procedure, excepting those that are not essential to operability. The term "consisting of' excludes any component, step or procedure not specifically delineated or listed. The term "or", unless stated otherwise, refers to the listed members individually as well as in any combination.

Any numerical range recited herein, include all values from the lower value to the upper value, in increments of one unit, provided that there is a separation of at least 2 units between any lower value and any higher value. As an example, if it is stated that the amount of a component, or a value of a compositional or physical property, such as, for example, amount of a blend component, softening temperature, melt index, etc., is between 1 and 100, it is intended that all individual values, such as, 1, 2, 3, etc., and all subranges, such as, 1 to 20, 55 to 70, 197 to 100, etc., are expressly enumerated in this specification. For values which are less than one, one unit is considered to be 0.0001, 0.001, 0.01 or 0.1, as appropriate. These are only examples of what is specifically intended, and all possible combinations of numerical values between the lowest value and the highest value enumerated, are to be considered to be expressly stated in this application. In other words, any numerical range recited herein includes any value or subrange within the stated range. Numerical ranges have been recited, as discussed herein, in reference to film thickness, melt index, melt flow rate, percent crystallinity, density, and other properties.

The term "multilayered film," as used herein, refers to a film structure with more than one layer or ply.

The term "film," as used herein, refers to a film structure with at least one layer or ply.

The term "inner layer," as used herein, refers to an interior film layer that is co-contiguous with another layer on each surface.

The term "composition," as used herein, includes a mixture of materials which comprise the composition, as well as reaction products and decomposition products formed from the materials of the composition.

The term "polymer" is a macromolecular compound prepared by polymerizing monomers of the same or different type. "Polymer" includes homopolymers, copolymers, terpolymers, interpolymers, and so on. The term "interpolymer" means a polymer prepared by the polymerization of at least two types of monomers or comonomers. It includes, but is not limited to, copolymers (which refer to polymers prepared from two different types of monomers), terpolymers (which refers to polymers prepared from three different types of monomers ), tetrapolymers (which refers to polymers prepared from four different types of monomers), and the like.

The term "olefin-based polymer" as used herein, refers to a polymer that comprises, in polymerized form, a majority weight percent of olefin (such as ethylene or propylene) and optionally one or more other comonomers.

The term "interpolymer," as used herein, refers to polymers prepared by the polymerization of at least two different types of monomers. The generic term interpolymer thus includes copolymers, employed to refer to polymers prepared from two different types of monomers, and polymers prepared from more than two different types of monomers.

The terms "blend" or "polymer blend," as used herein, mean a blend of two or more polymers. Such a blend may or may not be miscible (not phase separated at molecular level). Such a blend may or may not be phase separated. Such a blend may or may not contain one or more domain configurations, as determined from transmission electron spectroscopy, light scattering, x-ray scattering, and other methods known in the art.

The term, "ethylene-based polymer," as used herein, refers to a polymer that comprises, in polymerized form, a majority weight percent of ethylene, based on the weight of the polymer.

The term, "ethylene-based interpolymer," as used herein, refers to a polymer that comprises in polymerized form, a majority weight percent of ethylene, based on the total weight of the interpolymer, and at least one comonomer.

The term, "ethylene/$\alpha$-olefin interpolymer," as used herein, refers to a polymer that comprises, in polymerized form, a majority weight percent of ethylene, based on the total weight of the interpolymer, an $\alpha$-olefin comonomer, and optionally, one or more other comonomers.

The term, "propylene-based polymer," as used herein, refers to a polymer that comprises, in polymerized form, a majority weight percent of propylene, based on the total weight of the polymer more than 50 mole percent polymerized propylene monomer, based on the total amount of polymerizable monomer(s).

The term, "propylene-based interpolymer," as used herein, refers to a polymer that comprises, in polymerized form, a majority weight percent of propylene, based on the total weight of the interpolymer and at least one comonomer.

The term, "propylene/$\alpha$-olefin interpolymer," as used herein, refers to a polymer that comprises, in polymerized form, a majority weight percent of propylene, based on the total weight of the interpolymer, an $\alpha$-olefin comonomer, and optionally, one or more other comonomers.

The term, "propylene/ethylene interpolymer," as used herein, refers to a polymer that comprises, in polymerized form, a majority weight percent of propylene, based on the total weight of the interpolymer, ethylene comonomer, and optionally, one or more other comonomers.

TEST PROCEDURES

The specific test parameters within each test will depend on the polymer or polymer blend used. Some of the tests below describe test parameters that are indicated as representative of olefin-based resins. The particular parameters of a test are not intended to limit the scope of this disclosure. Those skilled in the art will understand the limitations of a particular set of test parameters, and will be able to determine appropriate parameters for other types of polymers and blends.

The average molecular weights and molecular weight distributions for ethylene-base polymers can be determined with a chromatographic system consisting of either a Polymer Laboratories Model PL-210 or a Polymer Laboratories Model PL-220. The column and carousel compartments are operated at 140°C for ethylene-based polymers. The columns are three Polymer Laboratories "10-micron Mixed-B" columns. The solvent is 1,2,4 trichlorobenzene. The samples are prepared at a concentration of 0.1 gram of polymer powder in 50 milliliters of solvent. The solvent used to prepare the samples contains 200 ppm of butylated hydroxytoluene (BHT). Samples are prepared by agitating lightly for 2 hours at 160°C. The injection volume is 100 microliters and the flow rate is 1.0 milliliters/minute. Calibration of the GPC column set is performed with narrow molecular weight distribution polystyrene standards, purchased from Polymer Laboratories (UK). The polystyrene standard peak molecular weights are converted to polyethylene molecular weights using the following equation (as described in Williams and Ward, J. Polym. Sci., Polym. Let., 6, 621 (1968)).

$$M_{polyethylene} = A \: x \: (M_{polystyrene})^B \: ,$$

where M is the molecular weight, A has a value of 0.4315 and B is equal to 1.0.

Equivalent molecular weight calculations for the ethylene-based polymers are performed using Viscotek TriSEC software Version 3.0. The molecular weights for propylene-based polymers can be determined using Mark-Houwink ratios according to ASTM D6474.9714-1, where, for polystyrene, a = 0.702 and log K = -3.9, and for propylene-based polymers, a = 0.725 and log K = -3.721. For propylene-based samples, the column and carousel compartments are operated at 160°C.

Polydispersity (Mw/Mn): A measure of the uniformity of chain lengths within a polymer sample. It defines the breadth of molecular weight distribution. It is obtained by dividing the weight average molecular weight (Mw) by the number average molecular weight (Mn). The Mw and Mn are determined by Gel Permeation-Liquid Chromatography.

Percent crystallinity for ethylene-based and propylene-based polymers can be determined by differential scanning calorimetry (DSC), using a TA Instruments Model Q1000 Differential Scanning Calorimeter. A sample of about 5-8 mg size is cut from the material to be tested, and placed directly in the DSC pan for analysis. For higher molecular weight materials, a thin film is normally pressed from the sample, but for some lower molecular weight samples, they may be either too sticky or flow too readily during pressing. Samples for testing may, however, be cut from plaques that are prepared, and used, for density testing. The sample is first heated at a rate of about 10°C/min to 180°C for ethylene-based polymers (230°C for propylene-based polymers), and held isothermally for three minutes at that temperature to ensure complete melting (the first heat). Then the sample is cooled at a rate of 10°C per minute to -60°C for ethylene-based polymers (-40°C for propylene-based polymers), and held there isothermally for three minutes, after which, it is again heated (the second heat) at a rate of 10°C per minute until complete melting. The thermogram from this second heat is referred to as the "second heat curve." Thermograms are plotted as watts/gram versus temperature.

The percent crystallinity in the ethylene-based polymers may be calculated using heat of fusion data, generated in the second heat curve (the heat of fusion is normally computed automatically by typical commercial DSC equipment, by integration of the relevant area under the heat curve). The equation for ethylene-based polymers is percent Cryst. = ($H_f$ ö 292 J/g) x 100; and the equation for propylene-based polymers is: percent Cryst. = ($H_f$ ö 165 J/g) x 100. The "percent Cryst." represents the percent crystallinity and "$H_f$" represents the heat of fusion of the polymer in Joules per gram (J/g).

The melting point(s) ($T_m$) of the polymers can be determined from the second heat curve obtained from DSC, as described above. The crystallization temperature ($T_c$) can be determined from the second cooling curve.

Density is determined in accordance with American Society for Testing and Materials (ASTM) procedure ASTM D792-00, Method B.

Melt flow rate (MFR) in g/10 min for propylene-based polymers is measured using ASTM D-1238-04 condition 230°C/2.16kg.

Melt index (12) in g/10 min for ethylene-based polymers is measured using ASTM D-1238-04, Condition 190°C/2.16kg.

Elmendorf Tear measures the average force required to propagate tearing through a specified length of plastic film on an Elmendorf-type tear tester and is measured in accordance with ASTM D-1922-06 (type-A). Specimens are cut in a constant radius form and have a pre-cut slit. Testing is performed using a knife-tipped pendulum. The average force is calculated from the pendulum energy lost while tearing the test specimen. Tear direction is in the machine direction (MD) and/or the cross direction (CD).

Dart impact strength measures the weight required to cause 50% of tested films to failure by impact from a falling dart and is measured by way of a dart impact tester, in accordance with ISO-7765-1-88: dart drop testing methods-B; method dart head diameter: 50 mm; drop height: 1.5m.

Oxygen transmission rate is measured at 25°C, 75% RH, 1 atm using a MOCON Ox-Tran Model 2/21 analyzer in accordance with ASTM D 3985-05. The test specimen is held such that it separates two sides of a test chamber. One side is exposed to a nitrogen atmosphere while the other side is exposed to an oxygen atmosphere. A coulometric sensor monitoring the exit port of the nitrogen side measures the amount of oxygen present. Testing is complete when the concentration of oxygen in the nitrogen side atmosphere is constant. For a stretched sample, the film is first stretched using an Instron tensile machine. The stretched film is then held on a metallic frame to avoid film relaxation, the film-on-frame subsequently placed in the chamber to measure the oxygen transmission.

Film thickness is measured with a Mitutoyo Digimatic Micrometer.

Tensile Strength: A measure of the force required under constant elongation to break a specimen of the film; measured by ASTM D 882-02. Test specimens should have a width to thickness ratios of at least 8:1. Two sets of specimens are tested for anisotropic materials, the first set parallel to the direction of polymer orientation (MD - machine direction) and the second set perpendicular to the direction of polymer orientation (CD - cross direction).

| Term | Definition |
|---|---|
| Elongation @ Break | Tensile elongation corresponding to the point of rupture. |
| Elongation @ Yield | Tensile elongation corresponding to the point of yield. |
| Tensile Strength @ Break | Tensile stress corresponding to the point of rupture. |
| Tensile Strength @ Yield | Tensile stress corresponding to point of yield. |
| Secant Modulus | Slope of a line drawn from the point of zero strain to a point on the stress strain curve at a specified strain. |
| Film Toughness | Energy per unit volume absorbed by a specimen up to the point of rupture during a tensile test. The area under the stress strain curve. |

Elongation: A measure of the percent extension required to break a specimen of the film; measured by ASTM D 882-02.

Modulus: The ratio of the change in force to the change in elongation in the straight line portion of an Instron Tensile Testing curve; measured by ASTM D 882-02-Method A.

Tear Propagation: The force required to propagate a tear from a tiny slit made by a sharp blade in a specimen of the film; measured by ASTM D-1922-06A.

Puncture Force: The energy necessary to puncture a restrained specimen of film, similar to ball burst, defined above. However, the Instron Tensile Tester has the ability to measure the tensile/elongation curve to break. The "gradient" is the ratio of the change in force to change in elongation in the straight line portion of the curve. "Peak" is a measure of the maximum force exerted on the specimen to impart rupture. "Puncture Energy" is a measure of the energy absorbed by the sample prior to rupture. Puncture Force is measured by ASTM D 5748-95.

By way of example and not limitation, examples of the present disclosure will now be given.

EXAMPLES

TABLE 1 Monolayer Film Components

| | Density g/cc | MI/MFR | Polymer | Crystallinity (%) | Type |
|---|---|---|---|---|---|
| 1st Component | | | | | |
| LLDPE | 0.92 | 1.0MI | ethylene/octene | 46.7 | Ziegler-Natta |
| | | | | | |
| 2nd Component | | | | | |
| Polypropylene (PP) | 0.90 | 2.1 MFR | n/a-homo, isotactic | 49.0 | Ziegler-Natta |

(continued)

| 2nd Component | | | | | |
|---|---|---|---|---|---|
| Propylene copolymer (PE) | 0.90 | 2.0 MFR | propylene/ethylene | 30.4 | Ziegler-Natta |
| HDPE | 0.956 | 2.0 MI | ethylene/butene | 52.3 | Ziegler-Natta |

Monolayer samples are fabricated on a Collin (type 180/400) blown film line. The extruder specifications are summarized in the table below.

Extruder specifications and layout

Extruder
Screw length (mm):     750
Screw diameter (mm):     30

The die has a diameter of 60mm and a die gap of 1.2mm. The formed tube is cooled using a Dual lip air ring. The extrusion temperatures are set accordingly to get a melt temperature of about 220°C for polyethylene and about 230°C for the core layer.

All of the films are produced using the following constant parameters: total output= 5 kg/h; blow-up ratio (BUR) =2.5; freeze line height (FLH) »100-150mm; and a film thickness of about 25 microns.

TABLE 2A

| Monolayer Films-un-stretched | | | | | | | | | |
|---|---|---|---|---|---|---|---|---|---|
| | Blend | Wt % Blend[1] | Thickness (μm) | Density | OTR cc/m2/day | DI (g) | Puncture Force (N) | CDTear (g) | MD Tear (g) |
| Control | LLDPE | 100 | 22 | 0.92 | 10866 | 162 | 13 | 558 | 289 |
| Example 1 | LLDPE/PP | 90/10 | 32 | 0.918 | 6507 | 148 | 13 | 703 | 239 |
| Example 2 | LLDPE/PE | 90/10 | 24 | 0.918 | 8853 | 118 | 11 | 545 | 202 |
| Example 3 | LLDPE/ HDPE | 90/10 | 32 | 0.9235 | 5941 | 179 | 14 | 739 | 352 |
| [1] Wt% based on the total weight of the blend<br>OTR = oxygen transmission rate<br>DI = dart impact | | | | | | | | | |

TABLE 2B

| Monolayer Films-100% stretched | | | | |
|---|---|---|---|---|
| | Blend | Wt % Blend[1] | Thickness (μm) | OTR cc/m2/day |
| Control | LLDPE | 100 | 17 | 9927 |
| Example 1 | LLDPE/PP | 90/10 | 20 | 6991 |
| Example 2 | LLDPE/PE | 90/10 | 15 | 8621 |
| Example 3 | LLDPE/HDPE | 90/10 | 24 | 5700 |
| [1]Wt % based on the total weight of the blend<br>OTR = oxygen transmission rate | | | | |

B. Multilayer Film

TABLE 3A

| Multilayer Film Components | | | | | |
|---|---|---|---|---|---|
| | Density g/cc | MI/MFR | Polymer | Crystallinity (%) | Type |
| LLDPE | 0.92 | 1.0 MI | ethylene/octene | 46.7 | Ziegler-Natta |
| sLLDPE | 0.92 | 0.85 MI | ethylene/octene | | Metallocene |
| Polypropylene (PP) | 0.90 | 2.1 MFR | n/a-homo, isotactic | 49.0 | Ziegler-Natta |
| Propylene copolymer (PE) | 0.90 | 2.0 MFR | propylene/ethylene | 30.4 | Ziegler-Natta |
| HDPE | 0.956 | 1.0 MI | ethylene/butene | 52.3 | Ziegler-Natta |

Samples are fabricated on a Collin (type 180/400) blown film line. Three extruders are used to produce the three layer structures. The extruder specifications are summarized in the table below.

TABLE 4

| Extruder specifications and layer layout | | | |
|---|---|---|---|
| Extruder | A | B | C |
| Layer | Outer | Inner | Outer |
| Screw length (mm) | 625 | 750 | 625 |
| Screw diameter (mm) | 25 | 30 | 25 |

The melt streams are joined to a multilayer composition using a spiral mandrel distributor (model RWT 40) having a diameter of 60mm and a die gap of 1.2mm. The formed multilayer tube is cooled using a Dual lip air ring. The extrusion temperatures are set accordingly to obtain a melt temperature of about 220°C for the outer layers and about 230°C for the inner layer.

All of the films are produced using the following constant parameters: total output= 5 kg/h; blow-up ratio (BUR) =2.5; die gap=1.2; froze line height (FLH) =100-150mm; air temperature at cooling ring 20°C; and a film thickness of either 25 microns or 50 microns.

TABLE 5A

| Multilayer Fihns--Un-stretched | | | | | | | | | |
|---|---|---|---|---|---|---|---|---|---|
| Example # | Structure | % Layer config[2] | Thickness[3] (μm) | Density (g/cc) | OTR cc/m2/day | DI (g) | Punc. Force (N) | CD Tear (g) | MD Tear (g) |
| Control | LLDPE | 100 | 22.2 | 0.92 | 10866.3 | 162 | 13 | 558 | 289 |
| 10 | LLDPE/PP/ LLDPE | 45/10/45 | 26.8 | 0.918 | 7168.9 | 183 | 12 | 663 | 267 |
| 11 | LLDPE/PE/ LLDPE | 45/10/45 | 28.9 | 0.918 | 7176.7 | 202 | 17 | 674 | 252 |
| 12 | LLDPE/ HDPE/ LLDPE | 45/10/45 | 26.0 | 0.9235 | 6504.6 | 157 | 10 | 584 | 259 |
| 13 | LLDPE/ HDPE/ LLDPE | 40/20/40 | 28.5 | 0.9272 | 5831.9 | 146 | 6 | 573 | 238 |

(continued)

| Multilayer Fihns--Un-stretched | | | | | | | | | |
|---|---|---|---|---|---|---|---|---|---|
| Example # | Structure | % Layer config[2] | Thickness[3] (μm) | Density (g/cc) | OTR cc/m2/day | DI (g) | Punc. Force (N) | CD Tear (g) | MD Tear (g) |
| 14 | LLDPE/ LLDPE/ HDPE | 45/45/10 | 27.8 | 0.9235 | 7017.7 | 182 | 13 | 645 | 347 |
| Layer configuration based on total film thickness [3] Thickness based on the total thickness of final multilayer film OTR = oxygen transmission rate DI = dart impact | | | | | | | | | |

TABLE 5B

| Multilayer Films-100% stretched | | | | |
|---|---|---|---|---|
| Example # | Structure | % Layer config[2] | Thickness[3] (μm) | OTR cc/m2/day |
| Control | LLDPE | 100 | 17 | 9927 |
| 10 | LLDPE/PP/LLDPE | 45/10/45 | 23 | 7046 |
| 11 | LLDPE/PE/LLDPE | 45/10/45 | 23 | 6970 |
| 12 | LLDPE/HDPE/LLDPE | 45/10/45 | 20 | 5842 |
| 13 | LLDPE/HDPE/LLDPE | 40/20/40 | 20 | 5162 |
| 14 | LLDPE/LLDPE/HDPE | 45/45/10 | 22 | 6176 |
| [2]Layer configuration based on total film thickness [3] Thickness based on the total thickness of final multilayer film OTR = oxygen transmission rate | | | | |

The present films have improved oxygen barrier properties particularly when compared to conventional silo and clamp storage systems. The present films demonstrate mechanical properties that are at least as good as (or better than) conventional silage films. The present films advantageously reduce the amount of film material required for bale silage wrapping - reducing costs and improving production efficiency.

It is specifically intended that the present disclosure not be limited to the embodiments and illustrations contained herein, but include modified forms of those embodiments including portions of the embodiments and combinations of elements of different embodiments as come within the scope of the following claims.

**Claims**

1. A film comprising:

a blend of a first component and a second component, the first component comprising a linear low density polyethylene; and
the second component comprising a member selected from the group consisting of a propylene-based polymer, a propylene homopolymer, a propylene/α-olefin interpolymer, a propylene/ethylene interpolymer, a high density polyethylene, and combinations thereof, the film having a thickness from about 1 micron to about 100 microns.

2. The film of claim 1 having an oxygen transmission rate less than 10,800 cc/m$^2$/24hr as measured in accordance with ASTM D 3985-05.

3. The film of any of claims 1-2, wherein the linear low density polyethylene is an ethylene/octene copolymer having a density from about 0.91 g/cc to about 0.93 g/cc, or about 0.92 g/cc, a melt index from about 0.1 g/10 min to about 10 g/10min, or about 1.0 g/10 min, and a crystallinity from about 40% to about 50%, or about 47%.

4. The film of any of claims 1-3, wherein the second component is a propylene homopolymer having a density from about 0.88 g/cc to about 0.92 g/cc, or about 0.90 g/cc, a melt flow rate from about 1.0 g/10 min to about 10 g/10 min, or about 2.1 g/10 min, and a crystallinity from about 40% to about 60%, or about 49%.

5. The film of any of claims 1-3, wherein the second component is a propylene/α-olefin interpolymer having a density from about 0.85 g/cc to about 0.95 g/cc, or about 0.90 g/cc, a melt flow rate from about 0.1 g/10 min to about 10 g/10 min, and a crystallinity from about 20% to about 40%, or about 30%.

6. The film of any of claims 1-3, wherein the second component is a propylene/ethylene interpolymer having a density from about 0.85 g/cc to about 0.95 g/cc, or about 0.90 g/cc, a melt flow rate from about 0.1 g/10 min to about 10 g/10 min, and a crystallinity from about 20% to about 40%, or about 30%.

7. The film of any of claims 1-3, wherein the second component is a propylene/ethylene copolymer having a density from about 0.85 g/cc to about 0.95 g/cc, or about 0.90 g/cc, a melt flow rate from about 0.1 g/10 min to about 10 g/10 min, or about 2.0 g/10 min, and a crystallinity from about 20% to about 40%, or about 30 %.

8. The film of any of claims 1-3, wherein the second component is a high density polyethylene having a density from about 0.940 g/cc to about 0.970 g/cc, or about 0.956 g/cc, a melt index from about 0.1 g/10 min to about 10 g/10 min, or about 2.0 g/ 10 min, and a crystallinity from about 40% to about 60%, or about 52 %.

9. The film of any of claims 1-8, having a dart impact strength from about 100 g to about 300 g as measured in accordance with ISO 7765-1-88 A.

10. The film of any of claims 1-9, having an Elmendorf tear value (CD) from about 500g to about 800g as measured in accordance with ASTM D-1922-06 (type A).

11. The film of any of claims 1-10, having an Elmendorf tear value (MD) from about 200g to about 400g as measured in accordance with ASTM D-1922-06 (type A).

12. The film of any of claims 1-11, having a puncture force from about 10g to about 20g as measured in accordance with ASTM-D 5748-95.

13. The film of any of claims 1-12, wherein the film is an un-stretched film having a thickness from about 20 microns to about 40 microns.

14. The film of any of claims 1-12, wherein the film is a stretched film having a thickness from about 10 microns to about 30 microns.

15. The film of any of claims 1-14, comprising from about 60 wt % to about 99 wt % of the first component and from about 40 wt % to about 1 wt % of the second component.

16. The film of any of claims 1-15, comprising about 90 wt % of the first component and about 10 wt % of the second component.

17. The film of any of claims 1-16, comprising about 90 wt % linear low density polyethylene and about 10 wt % propylene-based polymer.

18. The film of any of claims 1-16, comprising about 90 wt % linear low density polyethylene and about 10 wt % propylene homopolymer.

19. The film of any of claims 1-16, comprising about 90 wt % linear low density polyethylene and about 10 wt % propylene/α-olefin interpolymer.

20. The film of any of claims 1-16, comprising about 90 wt % linear low density polyethylene and about 10 wt % propylene/ethylene interpolymer.

21. The film of any of claims 1-16, comprising about 90 wt % linear low density polyethylene and about 10 wt % high density polyethylene.

22. A multilayer film comprising:

an inner layer located between a first outer layer and a second outer layer, the inner layer comprising a component selected from the group consisting of high density polyethylene, propylene homopolymer, propylene/α-olefin interpolymer, and combinations thereof;
the first outer layer and the second outer layer being the same or different, each outer layer comprising a component selected from the group consisting of a linear low density polyethylene, a high density polyethylene, a propylene/α-olefin interpolymer, and

combinations thereof, wherein a thickness of at least one outer layer is greater than the thickness of the inner layer.

23. The multilayer film of claim 22, wherein the thickness of each outer layer is greater than the thickness of the inner layer.

24. The multilayer film of any of claims 22-23, wherein the inner layer has a thickness less than or equal to about 20% the total thickness of the film.

25. The multilayer film of any of claims 22-24, having an oxygen transmission rate less than about 10,800 cc/m$^2$/24hr as measured in accordance with ASTM D 3985-05.

26. The multilayer film of any of claims 22-25, wherein the inner layer is a high density polyethylene having a density from about 0.940 g/cc to about 0.970 g/cc, or about 0.956 g/cc, a melt index from about 0.1 g/10 min to about 10 g/10 min, or about 2.0 g/ 10 min, and a crystallinity from about 40% to about 60%, or about 52 %, and each outer layer is a linear low density polyethylene having a density from about 0.91 g/cc to about 0.93 g/cc, or about 0.92 g/cc, a melt index from about 0.1 g/10 min to about 10 g/10min, or about 1.0 g/10 min, and a crystallinity from about 40% to about 50% or about 47%.

27. The multilayer film of any of claims 22-25, wherein the inner layer is a propylene homopolymer having a density from about 0.88 g/cc to about 0.92 g/cc, or about 0.90 g/cc, a melt flow rate from about 1.0 g/10 min to about 10 g/ 10 min, or about 2.1 g/10 min, and a crystallinity from about 40% to about 60%, or about 49%, and each outer layer is a linear low density polyethylene having a density from about 0.91 g/cc to about 0.93 g/cc, or about 0.92 g/cc, a melt index from about 0.1 g/10 min to about 10 g/10min, or about 1.0 g/10 min, and a crystallinity from about 40% to about 50% or about 47%.

28. The multilayer film of any of claims 22-25, wherein the inner layer is a propylene/ethylene interpolymer having a density from about 0.85 g/cc to about 0.95 g/cc, or about 0.90 g/cc, a melt flow rate from about 0.1 g/10 min to about 10 g/10 min, and a crystallinity from about 20% to about 40%, or about 30%, and each outer layer is a linear low density polyethylene having a density from about 0.91 g/cc to about 0.93 g/cc, or about 0.92 g/cc, a melt index from about 0.1 g/10 min to about 10 g/10min, or about 1.0 g/10 min, and a crystallinity from about 40% to about 50% or about 47%.

29. The multilayer film of any of claims 22-25, wherein at least one outer layer comprises about 90 wt % linear low density polyethylene and about 10 wt % propylene homopolymer.

30. The film of any of claims 22-25, wherein at least one outer layer comprises about 90 wt % linear low density polyethylene and about 10 wt % high density polyethylene.

31. The multilayer film of any of claims 22-25, wherein at least one outer layer comprises about 90 wt % linear low density polyethylene and about 10 wt % propylene/ethylene interpolymer.

32. The multilayer film of any of claims 22-31, wherein the film is an un-stretched film having a thickness from about 20 microns to about 40 microns.

33. The multilayer film of any of claims 22-31, wherein the film is a stretched film having a thickness from about 10 microns to about 30 microns.

**34.** A method for producing bale silage comprising:

wrapping a wrapping film around a bale of a forage crop;
forming, with the wrapping film, an airtight barrier around the bale; and
preventing, with the barrier, less than 10,800 cc/m$^2$/24hr of oxygen to contact the bale.

**35.** The method of claim 34, wherein the wrapping film is a monolayer film comprising a blend of a first component and a second component, the first component comprising a linear low density polyethylene, and the second component comprising a member selected from the group consisting of a propylene homopolymer, a propylene/$\alpha$-olefin interpolymer, a propylene/ethylene interpolymer, a high density polyethylene, and combinations thereof.

**36.** The method of claim 34, wherein the wrapping film is a multilayer film comprising an inner layer located between a first outer layer and a second outer layer, the inner layer comprising a component selected from the group consisting of a high density polyethylene, a propylene homopolymer, a propylene/$\alpha$-olefin interpolymer, a propylene/ethylene interpolymer and combinations thereof, and the first outer layer and the second outer layer are the same or different and comprise a component selected from the group consisting of a linear low density polyethylene, a high density polyethylene, a propylene/$\alpha$-olefin interpolymer, a propylene/ethylene interpolymer and combinations thereof

**37.** The method of any of claims 34-36, comprising stretching the wrapping film during the wrapping.

**Europäisches Patentamt**
**European Patent Office**
**Office européen des brevets**

# EUROPEAN SEARCH REPORT

Application Number

EP 08 38 2039

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 565 847 A (BAHL SURINDER K [US] ET AL) 21 January 1986 (1986-01-21) * claim 1; example 1 * | 1,13, 15-20 | INV. C08J5/18 |
| X | US 5 614 315 A (KONDO KAZUO [JP] ET AL) 25 March 1997 (1997-03-25) * column 4, lines 9,10; claims 1-10; example 2 * | 1,3,6,7 | |
| X | EP 0 260 038 A (BP CHEM INT LTD [GB]) 16 March 1988 (1988-03-16) * examples 1,4,5 * | 1,5,9, 13, 15-17,19 | |
| X | WO 98/20062 A (DOW CHEMICAL CO [US]; WHITEMAN NICHOLE F [US]; YOUNG GINA L [US]; WOOS) 14 May 1998 (1998-05-14) * claim 1; examples 1,3 * | 1,2, 15-17,19 | |

| TECHNICAL FIELDS SEARCHED (IPC) |
|---|
| C08J C08L B32B |

~~The present search report has been drawn up for all claims~~

| Place of search | Date of completion of the search | Examiner |
|---|---|---|
| Munich | 13 February 2009 | Knutzen-Mies, Karen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-7, 9-20

☐ The present supplementary European search report has been drawn up for those parts of the European patent application which relate to the invention first mentioned in the claims (Rule 164 (1) EPC).

Europäisches Patentamt
European Patent Office
Office européen des brevets

**LACK OF UNITY OF INVENTION
SHEET B**

Application Number

EP 08 38 2039

The Search Division considers that the present European patent application does not comply with the requirements of unity of invention and relates to several inventions or groups of inventions, namely:

1. claims: 1-7,9-20

   A film comprising a first component comprising a linear low density polyethylene and a second component comprising one or more of a propylene-based polymer, wherein the film has a thickness between 1 and 100 micrometer.
   ---

2. claims: 1-3,8-16,21

   A film comprising a first component comprising a linear low density polyethylene and a second component comprising one or more of a high density polyethylene, wherein the film has a thickness between 1 and 100 micrometer.
   ---

3. claims: 22-33

   A multilayer film comprising an inner layer between a first outer layer and a second outer layer, the inner layer comprising a component selected from high density polyethylene, propylene homopolymer, propylene/alpha-olefin interpolymer, and the outer layers being the same or different and comprising a component selected from linear low density polyethylene, high density polyethylene, propylene/alpha-olefin interpolymer, and at least one outer layer being thicker than the inner layer.
   ---

4. claims: 34-37

   A method for producing bale silage comprising wrapping a wrapping film around a bale of a forage crop, forming with the wrapping film an airtight barrier around the bale and preventing with the barrier less than 10,800 ml/squm/24hr of oxygen to contact the bale.
   ---

**ANNEX TO THE EUROPEAN SEARCH REPORT
ON EUROPEAN PATENT APPLICATION NO.**

EP 08 38 2039

This annex lists the patent family members relating to the patent documents cited in the above-mentioned European search report.
The members are as contained in the European Patent Office EDP file on
The European Patent Office is in no way liable for these particulars which are merely given for the purpose of information.

13-02-2009

| Patent document cited in search report | | Publication date | Patent family member(s) | | Publication date |
|---|---|---|---|---|---|
| US 4565847 | A | 21-01-1986 | AU | 575101 B2 | 21-07-1988 |
| | | | AU | 3697584 A | 11-07-1985 |
| | | | BR | 8500008 A | 13-08-1985 |
| | | | CA | 1225782 A1 | 18-08-1987 |
| | | | DE | 3573795 D1 | 23-11-1989 |
| | | | DK | 2985 A | 05-07-1985 |
| | | | EP | 0159102 A1 | 23-10-1985 |
| | | | ES | 8705004 A1 | 01-07-1987 |
| | | | FI | 845021 A | 05-07-1985 |
| | | | GB | 2152516 A | 07-08-1985 |
| | | | IL | 73937 A | 30-06-1988 |
| | | | JP | 60158238 A | 19-08-1985 |
| | | | MA | 20317 A1 | 01-10-1985 |
| | | | NZ | 210639 A | 30-10-1987 |
| | | | PH | 20892 A | 27-05-1987 |
| | | | PT | 79794 A | 01-02-1985 |
| | | | ZA | 8409912 A | 30-07-1986 |
| US 5614315 | A | 25-03-1997 | CN | 1136996 A | 04-12-1996 |
| | | | FR | 2729608 A1 | 26-07-1996 |
| | | | GB | 2297060 A | 24-07-1996 |
| | | | HK | 1012163 A1 | 23-07-1999 |
| | | | JP | 8230092 A | 10-09-1996 |
| EP 0260038 | A | 16-03-1988 | DE | 3788989 D1 | 17-03-1994 |
| | | | DE | 3788989 T2 | 19-05-1994 |
| | | | FR | 2603291 A1 | 04-03-1988 |
| | | | JP | 63132951 A | 04-06-1988 |
| | | | US | 4871813 A | 03-10-1989 |
| WO 9820062 | A | 14-05-1998 | AT | 214077 T | 15-03-2002 |
| | | | AU | 723498 B2 | 31-08-2000 |
| | | | AU | 4989797 A | 29-05-1998 |
| | | | BR | 9712743 A | 19-10-1999 |
| | | | CA | 2269125 A1 | 14-05-1998 |
| | | | CN | 1236376 A | 24-11-1999 |
| | | | DE | 69710912 D1 | 11-04-2002 |
| | | | DE | 69710912 T2 | 29-08-2002 |
| | | | EP | 0938516 A1 | 01-09-1999 |
| | | | ES | 2169853 T3 | 16-07-2002 |
| | | | JP | 2001504875 T | 10-04-2001 |
| | | | KR | 20000053030 A | 25-08-2000 |
| | | | US | 6086967 A | 11-07-2000 |
| | | | ZA | 9709662 A | 28-04-1999 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5324800 A
- US 5132380 A
- US 5047468 A

### Non-patent literature cited in the description

- Periodic Table of the Elements. CRC Press, Inc, 2003
- **Williams ; Ward.** *J. Polym. Sci., Polym. Let.,* 1968, vol. 6, 621